# FASCICULE DE BREVET EUROPEEN

(11) **EP 2 242 922 B1**
(45) Date de publication et mention de la délivrance du brevet: **17.09.2014**
(21) Numéro de dépôt: 08878087.9
(22) Date de dépôt: 21.11.2008
(51) Int. Cl.: F02K 1/76, B64D 29/00

(54) **SYSTEME DE COMMANDE DE CAPOT D'INVERSEUR DE POUSSEE POUR NACELLE DE TURBOREACTEUR**
SYSTEM ZUR STEUERUNG DER SCHUBUMKEHRERHAUBE EINER MANTELSTROM-TRIEBWERKSGONDEL
SYSTEM FOR CONTROLLING THE COWL OF A TURBOJET ENGINE NACELLE THRUST REVERSER

(30) Priorité: 13.02.2008 FR 0800773
(43) Date de publication de la demande: 27.10.2010
(73) Titulaire: Aircelle, 76700 Gonfreville l'Orcher (FR)
(72) Inventeur: PEREIRA, David, F-91470 Limours (FR); LAMARRE, Jean, F-91440 Bures sur Yvette (FR); VANCON, Philippe, F-78170 La Celle Saint Cloud (FR); SANCHEZ, Manuel, F-78000 Versailles (FR)
(74) Mandataire: Gaillarde, Frédéric F. Ch.
(86) Numéro de dépôt international: PCT/FR2008/001632
(87) Numéro de publication internationale: WO 2010/055213

(56) Documents cités:
- EP-A- 0 843 089
- EP-A- 1 413 736
- WO-A-2006/134253
- US-B1- 6 439 504

## Description

La présente invention se rapporte à nacelle de turboréacteur comprenant une section avant d'entrée d'air, une section médiane destinée à entourer une soufflante du turboréacteur et une section arrière équipée d'au moins un système d'inversion de poussée comprenant, d'une part, des moyens de déviation d'au moins une partie d'un flux d'air du turboréacteur, et d'autre part, au moins un capot mobile apte à passer, sous l'action d'au moins un moyen d'actionnement électromécanique, alternativement d'une position de fermeture, dans laquelle il assure la continuité aérodynamique de la nacelle et dans laquelle les moyens de déviation sont inactifs, à une position d'ouverture dans laquelle il ouvre un passage dans la nacelle et dans laquelle les moyens de déviation sont actifs.

Un avion est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système électro- ou hydromécanique d'actionnement d'un inverseur de poussée et un système électro- ou hydromécanique d'actionnement de capotages destinés à permettre des opérations de maintenance sur le turboréacteur.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur permet de renvoyer vers l'avant de la nacelle tout ou partie des flux de gaz éjectés par le turboréacteur, générant de ce fait une contre-poussée qui vient s'ajouter au freinage des roues de l'avion. Pour ce faire, un inverseur de poussée comprend de part et d'autre de la nacelle un capot mobile déplaçable entre, d'une part, une position déployée qui ouvre dans la nacelle un passage destiné au flux dévié lors d'une phase de freinage, et d'autre part, une position d'escamotage qui ferme ce passage lors du fonctionnement normal du turboréacteur ou lorsque l'avion est à l'arrêt.

Actuellement ces systèmes d'actionnement sont principalement mis en oeuvre par des vérins hydrauliques ou pneumatiques. Ces vérins nécessitent un réseau de transport d'un fluide sous pression obtenu soit par piquage d'air sur le turboréacteur soit par prélèvement sur le circuit hydraulique de l'avion. Cependant, de tels systèmes sont encombrants et requièrent une maintenance importante car la moindre fuite dans le réseau hydraulique ou pneumatique peut avoir des conséquences dommageables tant sur l'inverseur que sur d'autres parties de la nacelle. Par ailleurs, les vérins hydrauliques ou pneumatiques délivrent toujours la puissance maximale disponible, ce qui entraîne une usure prématurée des équipements.

Pour pallier les inconvénients liés aux systèmes pneumatiques et hydrauliques, les constructeurs et équipementiers de nacelles ont cherché à les remplacer et à utiliser au maximum des systèmes d'actionnement électriques de manière à alléger la nacelle et à en simplifier le fonctionnement, notamment au niveau des cycles de maintenance nécessaires et de la gestion des fluides hydrauliques ou pneumatiques. Il existe déjà certains capotages de nacelles destinés à la maintenance du turboréacteur qui sont actionnées par des vérins électriques, et un inverseur de poussée actionné électriquement est décrit dans le document EP 0 843 089.

Les systèmes d'actionnement électriques permettent une gestion optimale de l'énergie en fonction de la puissance réellement nécessaire au fonctionnement de ces systèmes tout en occupant moins d'espace dans la nacelle et en ne requérant pas de circuit de circulation de fluide sous pression. Ils permettent également d'intégrer des systèmes de commandes et de pilotages électroniques, tels que décrit par exemple dans les demandes françaises 04.07096, 07.07098, 07.01058 et la demande européenne EP-A-0 843 089.

La gestion électronique de l'actionnement du système d'inversion de poussée présente de nombreuses contraintes.

Tout d'abord, la fonction d'inversion de poussée est régie par des exigences de certifications très fortes visant à assurer la sécurité du système. Ce processus de certification est très coûteux.

Ensuite, les fonctions de contrôle et surveillance sont généralement inclus dans un contrôleur avion (connu sous le nom de FADEC ou EEC) qui suit son propre processus de certification. Ainsi, les paramètres de surveillance et les valeurs seuil susceptibles de déclencher certaines actions sont difficilement accessibles et paramétrables sans que le contrôleur avion ait à subir un nouveau cycle de certification, ce qui est très coûteux lorsque les modifications apportées se limitent à une fraction seulement des fonctionnalités gérées par le calculateur avion.

La présente invention vise donc à pallier les inconvénients ci-dessus mentionnés et à proposer une nacelle de turboréacteur comprenant un système de commande du dispositif d'inversion de poussée optimisant ces aspects.

Pour ce faire, la présente invention se rapporte à un aéronef comprenant au moins deux turboréacteurs logés chacun dans une nacelle, chaque nacelle de turboréacteur comprenant une section avant d'entrée d'air, une section médiane destinée à entourer une soufflante du turboréacteur et une section arrière équipée d'au moins un système d'inversion de poussée comprenant, d'une part, des moyens de déviation d'au moins une partie d'un flux d'air du turboréacteur , et d'autre part, au moins un capot mobile apte à passer, sous l'action d'au moins un moyen d'actionnement électromécanique, alternativement d'une position de fermeture, dans laquelle il assure la continuité aérodynamique de la nacelle et dans laquelle les moyens de déviation sont inactifs, à une position d'ouverture dans laquelle il ouvre un passage dans la nacelle et dans laquelle les moyens de déviation sont actifs, l'aéronef comprenant d'une part, au moins une unité de contrôle de puissance équipant chaque nacelle, l'au moins une unité de contrôle de puissance étant apte à transformer une alimentation électrique haute tension en au moins une alimentation électrique à destination des moyens d'actionnement électromécaniques, et au moins une entrée de pilotage de ladite unité de contrôle de puissance, et d'autre part, au moins une unité de pilotage de l'unité de contrôle de puissance distincte et séparée de cette dernière, et comprenant au moins une entrée de commande et au moins une sortie de pilotage destinée à être reliée à l'entrée de pilotage de l'au moins une unité de contrôle de puissance, l'unité de pilotage étant mutualisée entre les au moins deux nacelles et comprenant au moins une entrée de données en provenance d'un calculateur avion communément appelé FADEC ou EEC.

Ainsi, en prévoyant une unité de contrôle de puissance et une unité de pilotage distinctes et séparées, chaque unité peut subir un processus de certification qui lui convient et non plus le processus de certification le plus exigeant de l'ensemble.

Ceci permet également un développement des logiciels embarqués et de l'électronique de contrôle approprié au processus de certification qui sera appliqué. Il en résulte une économie importante de temps et de coût de développement.

Par ailleurs, la fonction de pilotage étant ainsi rendue distincte de la fonction de puissance, il est possible de regrouper les fonctions de surveillance et contrôle dans cette unité de pilotage dont le ou les logiciels embarqués et/ou les équipements électroniques peuvent être mis à jour et changés plus rapidement et sans avoir à intervenir sur d'autres éléments.

Avantageusement, l'unité de pilotage comprend également au moins une sortie de commande d'au moins un moyen de verrouillage du système d'inversion de poussée.

Avantageusement encore, l'unité de contrôle de puissance comprend au moins une résistance de dissipation, ou autre dispositif de dissipation, par exemple un système permettant éventuellement de récupérer l'énergie dissipée. Préférentiellement, la résistance de dissipation est externe à un boîtier de l'unité de contrôle de puissance correspondante

Préférentiellement, l'unité de contrôle de puissance comprend au moins un onduleurs à pilotage trapèze. On pourra également éventuellement utiliser un commande vectorielle.

Préférentiellement encore, l'unité de contrôle de puissance comprend un redresseur de courant alternatif vers courant continu. Bien évidemment, dans le cas ou l'avion dispose d'un réseau électrique en courant continu, il est possible d'utiliser ce courant continu.

Avantageusement, l'unité de contrôle de puissance comprend un circuit de freinage comportant un interrupteur intégré. Le rôle de cet interrupteur est de simplifier la loi régissant l'ouverture de l'inverseur de poussée.

De manière avantageuse, l'unité de contrôle de puissance comprend au moins une entrée d'une donnée d'information de contrôle en provenance d'au moins un capteur de position et/ou un capteur de vitesse et/ou de freinage, par exemple.

Préférentiellement, l'unité de contrôle de puissance comprend au moins un dispositif de lissage passif ou actif de rejet de courant d'harmoniques.

Avantageusement, la nacelle comprend un disjoncteur disposé entre la source de puissance électrique et l'unité de contrôle de puissance.

De manière avantageuse, l'unité de contrôle de puissance comprend au moins une entrée de données en provenance d'un calculateur avion, communément appelé FADEC ou EEC.

De manière préférentielle, l'unité de contrôle de puissance est disposée dans une zone dite froide de la nacelle. Préférentiellement encore, l'unité de pilotage est située en baie avionique, les coûts de certification pour implanter un dispositif à cet endroit étant beaucoup plus faibles.

Avantageusement, l'unité de pilotage est alimentée en courant basse tension. Ainsi, seule l'unité de contrôle, commandant les moteurs des actionneurs électromécaniques et nécessitant une forte puissance électrique disponible, dispose de cette puissance. Les éléments électroniques de l'unité de pilotage, ne requérant qu'une faible puissance électrique, l'énergie disponible depuis l'avion n'est pas gaspillée.

Avantageusement encore, l'unité de contrôle de puissance et/ou l'unité de pilotage comprend au moins une sortie de données en direction d'un calculateur avion, communément appelé FADEC ou EEC.

Ceci permet que certains logiciels et composants de traitement de données soient logés à l'intérieur de l'unité de pilotage. Ainsi, le contrôleur avion reçoit une donnée prétraitée, ce qui permet d'économiser ses propres ressources de calcul.

Par ailleurs, ceci permet d'utiliser dans la nacelle des capteurs dits actifs, c'est-à-dire traitant directement l'information mesurée. La logique de traitement de ces mesures, et notamment les valeurs seuil auquel un ordre doit être déclenché, peut ainsi être plus facilement maîtrisée et adaptée au turboréacteur concerné.

De ce fait, l'unité de pilotage comprend avantageusement au moins une entrée de données en provenance d'au moins un capteur, de type capteur de position ou d'état.

Puisque l'unité de pilotage est mutualisée entre au moins deux nacelles, le nombre de boîtiers s'en trouve automatiquement réduit. Par ailleurs, l'unité de pilotage se situe ainsi dans une zone externe de la nacelle, ou dans une baie avionique, ce qui permet une meilleur dissipation thermique des composants électriques et électroniques.

La mise en oeuvre de l'invention sera mieux comprise à l'aide de la description détaillée qui est exposée ci-dessous en regard du dessin annexé.
La figure 1 est une représentation schématique simplifiée d'un système selon l'invention équipant deux nacelles de turboréacteurs.
La figure 2 est une représentation schématique d'un premier mode de réalisation d'un système de commande équipant une nacelle selon l'invention.

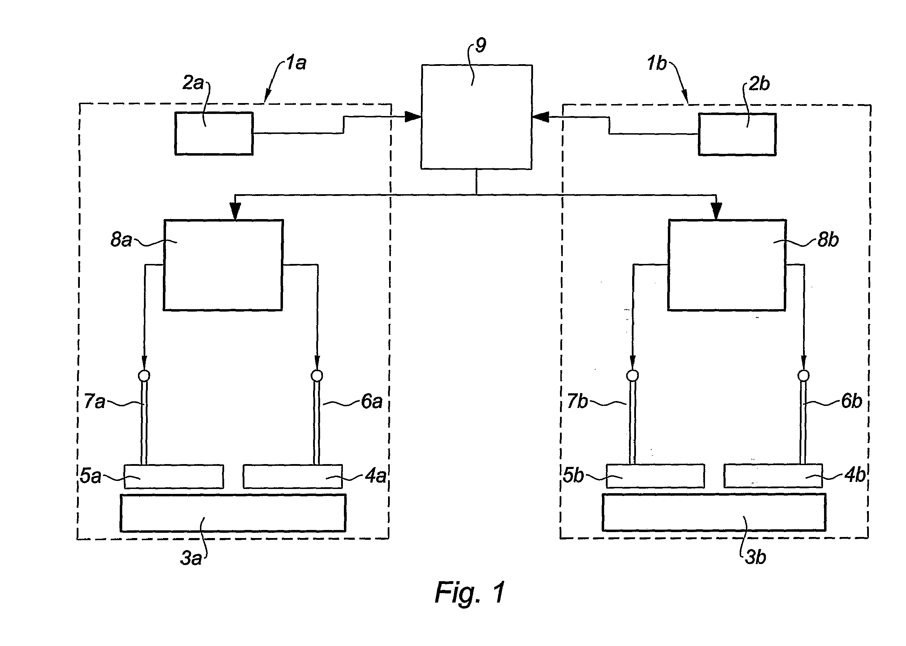

La figure 1 représente schématiquement un ensemble propulsif d'un aéronef comprenant deux turboréacteurs 3a, 3b logés chacun dans une nacelle 1a, 1b.

Chaque turboréacteur 3a, 3b est associé à un contrôleur avion 2a, 2b, communément appelé FADEC ou EEC.

Chaque nacelle 1 a, 1 b comprend également un dispositif d'inversion de poussée comportant chacun une porte droite 4a, 4b et une porte gauche 5a, 5b aptes chacune à être actionnée respectivement par au moins un actionneur électromécanique 6a, 6b, 7a, 7b.

Selon l'invention, l'alimentation électrique et la commande de chaque actionneur électromécanique 6a, 6b, 7a, 7b est réalisée par une unité de contrôle de puissance 8a, 8b équipant chaque nacelle 1 a, 1 b.

Selon l'invention également, chaque unité de contrôle de puissance 8a, 8b reçoit ses instructions de commande d'une unité de pilotage 9 distincte et commune pour les deux nacelles 1 a, 1 b.

Par ailleurs, l'unité de pilotage 9 reçoit également des informations en provenance de chacun des contrôleur avions 2a, 2b.

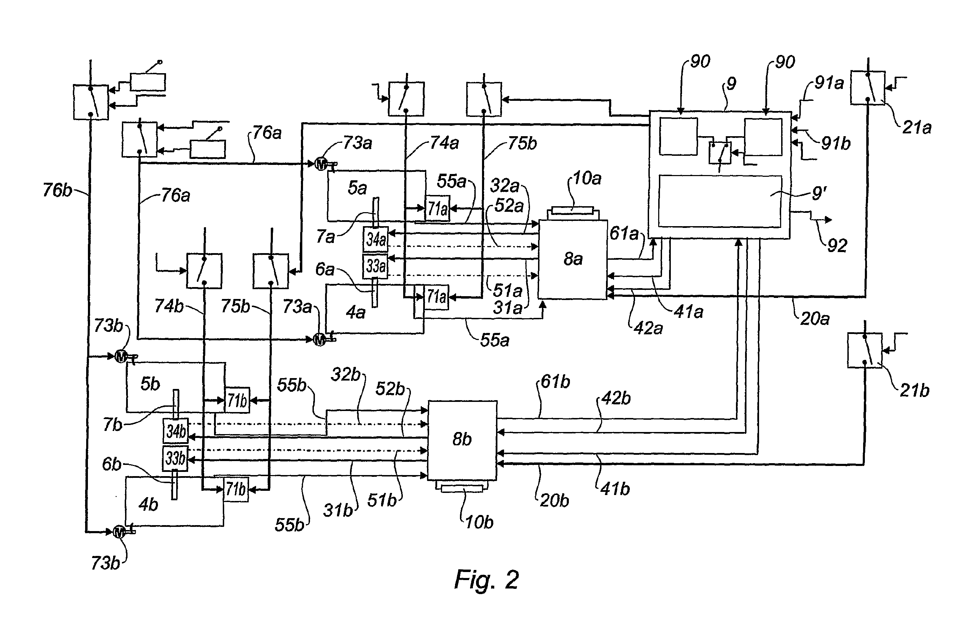

Les figures 2 et 3 détaillent les liaisons entre ces différents équipements.

Selon le système représenté sur la figure 2, chaque unité de contrôle de puissance 8a, 8b comprend une alimentation électrique haute puissance 20a, 20b en provenance d'une source d'alimentation électrique avion, chaque alimentation 20a, 20b est équipée d'un disjoncteur 21 a, 21 b de sécurité.

Chaque unité de contrôle de puissance 8a, 8b comprend également deux sorties de commande 31a, 31b et 32a, 32b alimentant et contrôle respectivement un moteur 33a, 33b et un moteur 34a, 34b de chaque actionneur électromécanique 6a, 6b et 7a, 7b en fonction de deux entrées de commande 41 a, 41b et 42a, 42b transmettant respectivement des ordres de déploiement et fermeture en provenance de l'unité de pilotage 9.

Chaque unité de contrôle de puissance 8a, 8b comprend également deux entrées de données 51a, 51b et 52a, 52b recevant des données en provenance d'un capteur de position des moteurs 33a, 33b et 34a, 34b, et une sortie de données 61 a, 61 b envoyant des données représentatives du statut du système d'inversion de poussée vers l'unité de pilotage 9. En plus des données en provenance des capteurs de position, les unités de contrôle de puissance 8a, 8b reçoivent également des données en provenance d'un détecteur de freinage selon une ligne 55a, 55b.

Bien évidemment, les données reçues et renvoyées ne sont pas limitées aux types de données présentées en exemple mais peuvent être tout type de données nécessaires à l'électronique de gestion de puissance et processus logique.

On notera également que chaque unité de contrôle de puissance 8a, 8b comprend une résistance de dissipation électrique 10a, 10b.

Chaque porte 4a, 4b, 5a, 5b est par ailleurs verrouillée en position fermée par au moins un verrou primaire 71a, 71b et un verrou tertiaire 73a, 73b.

Chaque verrou primaire 71 a, 71 b est commandé par une double ligne de commande comprenant une première ligne de commande 74a, 74b pilotée par le contrôleur avion correspondant 2a, 2b et une deuxième ligne de commande 75a, 75b, pilotée par l'unité de pilotage 9.

Chaque verrou tertiaire 73a, 73b est commandé par une ligne de commande 76a, 76b pilotée directement par des paramètres avion tel que l'altitude, la pression s'exerçant sur le train d'atterrissage, ou encore directement par les contrôleur avion 2a, 2b.

Chaque verrou primaire 71 a, 71 b et tertiaire 73a, 73b peut être associé à un capteur de position dont les données sont transmises à l'unité de pilotage 9. Par souci de clarté du schéma de la figure 2, ces lignes n'ont pas été représentées.

Ces lignes peuvent être à double sens et contrôler des capteurs de type inductifs et passifs dont l'électronique est concentrée dans l'unité de pilotage 9.

Selon l'invention, les unités de contrôle de puissance 8a, 8b sont donc pilotées par l'unité de pilotage 9.

L'unité de pilotage 9 est alimentée électriquement en faible puissance par un ou plusieurs bus électriques 90.

L'unité de pilotage 9 comprend une sous-unité de surveillance 9' recevant les mesures en provenance des sorties de données 61 a et 61b des unités de contrôle de puissance 8a, 8b et de divers capteurs ainsi que des paramètres en provenance des contrôleurs avions 2a, 2b selon des lignes de données 91a, 91 b.

Bien évidemment, le nombre d'entrées de données et la nature de ces données n'est pas limité à ce qui a été décrit dans cet exemple, et l'unité de pilotage 9 peut utiliser toute donnée nécessaire au bon fonctionnement de ses logiciels et composants électroniques embarqués.

L'unité de pilotage 9 renvoie également des données quant à l'état de verrouillage ou de déverrouillage du système d'inversion de poussée vers les contrôleurs avion 2a, 2b selon au moins une ligne de données de sortie 92.

Ainsi, lorsque le pilote de l'avion abaisse ou tire le levier commandant l'ouverture ou la fermeture du système d'inversion de poussée, les contrôleurs avion 2a, 2b transmettent cet ordre à l'unité de pilotage 9 et au verrous primaires 71a, 71b et tertaires 73a, 73b. L'unité de pilotage 9 gère alors de manière autonome les séquences correspondantes et envoie les instructions aux verrous primaires 71a, 71 b et tertiaires 73a, 73b ainsi qu'aux unités de contrôle de puissance 8a, 8b qui gèrent ensuite la puissance délivrée aux moteurs 33a, 33b et 34a, 34b de chaque actionneur électromécanique 6a, 6b, 7a, 7b.

Bien évidemment encore, l'unité de pilotage 9 n'est pas limitée à une seule sous-unité de surveillance 9' mais peut comprendre des sous-unités distinctes pour la gestion de chaque nacelle 1 a, 1 b, les différentes lignes de données et de commande pouvant être éventuellement redondées par mesure de sécurité en cas de défaillance d'un ligne.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de de l'invention tel que défini par le texte des revendications. Notamment, la liaison avec les contrôleurs avion 2a, 2b peut être bidirectionnelle, c'est-à-dire permettre à la fois une prise d'informations des contrôleurs avion et une remontée d'informations vers ceux-ci. Par ailleurs, la localisation des diverses unités est donnée dans l'exemple à titre indicatif et nullement limitatif. Ainsi, les unités de contrôle de puissance pourraient être localisées également en dehors de la nacelle.

## Revendications

1. Aéronef comprenant au moins deux turboréacteurs (3a, 3b) logés chacun dans une nacelle (1a, 1 b), chaque nacelle (1a, 1 b) de turboréacteur (3a, 3b) comprenant une section avant d'entrée d'air, une section médiane destinée à entourer une soufflante du turboréacteur et une section arrière équipée d'au moins un système d'inversion de poussée comprenant, d'une part, des moyens de déviation d'au moins une partie d'un flux d'air du turboréacteur, et d'autre part, au moins un capot mobile (4a, 5b, 5a, 5b) apte à passer, sous l'action d'au moins un moyen d'actionnement électromécanique (6a, 6b, 7a, 7b), alternativement d'une position de fermeture, dans laquelle il assure la continuité aérodynamique de la nacelle et dans laquelle les moyens de déviation sont inactifs, à une position d'ouverture dans laquelle il ouvre un passage dans la nacelle et dans laquelle les moyens de déviation sont actifs, l'aéronef comprenant d'une part, au moins une unité de contrôle de puissance (8a 8b) équipant chaque nacelle, l'au moins une unité de contrôle de puissance étant apte à transformer une alimentation électrique (20a, 20b) haute tension en au moins une alimentation électrique (31a, 31b, 32a, 32b) à destination des moyens d'actionnement électromécaniques, et au moins une entrée de pilotage (41a, 41b, 42a, 42b) de ladite unité de contrôle de puissance (8a, 8b), et d'autre part, au moins une unité de pilotage (9) de l'unité de contrôle de puissance (8a, 8b), distincte et séparée de cette dernière, et comprenant au moins une entrée de commande (91a, 91b) et au moins une sortie de pilotage (41a, 41b, 42a, 42b) destinée à être reliée à l'entrée de pilotage de l'au moins une unité de contrôle de puissance (8a, 8b), l'unité de pilotage (9) étant mutualisée entre les au moins deux nacelles (1a, 1b) et comprenant au moins une entrée de données (91 a, 91b) en provenance d'un calculateur avion (2a, 2b), communément appelé FADEC ou EEC.

2. Aéronef selon la revendication 1, **caractérisé en ce que** l'unité de pilotage (9) comprend également au moins une sortie de commande d'au moins un moyen de verrouillage (71 a, 71 b) du système d'inversion de poussée.

3. Aéronef selon l'une quelconque des revendications 1 ou 2, **caractérisé en ce que** l'unité de contrôle de puissance (8a, 8b) comprend au moins une résistance de dissipation (10a, 10b), préférentiellement externe à un boîtier de l'unité de contrôle de puissance correspondante.

4. Aéronef selon l'une quelconque des revendications 1 à 3, **caractérisé en ce que** l'unité de contrôle de puissance (8a, 8b) comprend au moins un onduleur à pilotage trapèze.

5. Aéronef selon l'une quelconque des revendications 1 à 4, **caractérisé en ce que** l'unité de contrôle de puissance (8a, 8b) comprend un redresseur de courant alternatif vers courant continu.

6. Aéronef selon l'une quelconque des revendications 1 à 5, **caractérisé en ce que** l'unité de contrôle de puissance (8a, 8b) comprend un circuit de freinage comportant un interrupteur intégré.

7. Aéronef selon l'une quelconque des revendications 1 à 6, **caractérisé en ce que** l'unité de contrôle de puissance (8a, 8b) comprend au moins une entrée (51 a, 51 b, 52a, 52b, 55a, 55b) d'une donnée d'information de contrôle en provenance d'au moins un capteur de position et/ou un capteur de vitesse et/ou de freinage, par exemple.

8. Aéronef selon l'une quelconque des revendications 1 à 7, **caractérisé en ce que** l'unité de contrôle de puissance (8a, 8b) comprend au moins un dispositif de lissage passif ou actif de rejet de courant d'harmoniques.

9. Aéronef selon l'une quelconque des revendications 1 à 8, **caractérisé en ce qu'**elle comprend un disjoncteur (21 a, 21 b) disposé entre la source de puissance électrique et l'unité de contrôle de puissance.

10. Aéronef selon l'une quelconque des revendications 1 à 9, **caractérisé en ce que** l'unité de contrôle de puissance (8a, 8b) comprend au moins une entrée de données en provenance d'un calculateur avion (2a, 2b), communément appelé FADEC ou EEC.

11. Aéronef selon l'une quelconque des revendications 1 à 10, **caractérisé en ce que** l'unité de contrôle de puissance (8a, 8b) est disposée dans une zone dite froide de la nacelle.

12. Aéronef selon l'une quelconque des revendications 1 à 11, **caractérisé en ce que** l'unité de pilotage (9) est alimentée en basse tension (90).

13. Aéronef selon l'une quelconque des revendications 1 à 12, **caractérisé en ce que** l'unité de contrôle de puissance (8a, 8b) et/ou l'unité de pilotage (9) comprend au moins une sortie de données en direction d'un calculateur avion, communément appelé FADEC ou EEC.

14. Aéronef selon l'une quelconque des revendications 1 à 13, **caractérisé en ce que** l'unité de pilotage (9) comprend au moins une entrée de données en provenance d'au moins un capteur, de type capteur de position ou d'état.

## Patentansprüche

1. Flugzeug, umfassend mindestens zwei Strahltriebwerke (3a, 3b), die jeweils in einer Gondel (1 a, 1 b) untergebracht sind, wobei jede Gondel (1 a, 1 b) eines Turbostrahltriebwerks (3a, 3b) einen vorderen Abschnitt zum Eintritt von Luft, einen mittleren Abschnitt, der ausgelegt ist, um eine Gebläse des Turbostrahltriebwerks zu umgeben, und einen hinteren Abschnitt umfasst, der mit mindestens einem System zur Schubumkehr ausgestattet ist, umfassend, einerseits, Mittel zur Umleitung mindestens eines Teils eines Luftstroms des Turbostrahltriebwerks, und andererseits mindestens eine bewegliche Haube (4a, 5b, 5a, 5b), die dazu ausgelegt ist, sich unter der Einwirkung von mindestens einem elektromechanischen Betätigungsmittel (6a, 6b, 7a, 7b), alternativ von einer Verschlussposition, in der sie die aerodynamische Güte der Gondel sicherstellt, und in der die Umleitungsmittel deaktiviert sind, in eine Öffnungsposition zu bewegen, in der sie einen Durchgang in der Gondel öffnet, und in der die Umleitungsmittel aktiviert sind, wobei das Flugzeug einerseits mindestens eine Einheit zur Kontrolle der Leistung (8a, 8b) umfasst, die jede Gondel ausstattet, wobei die mindestens eine Einheit zur Kontrolle der Leistung ausgelegt ist, um eine Hochspannungs-Stromversorgung (20a, 20b) in mindestens eine Stromversorgung (31 a, 31 b, 32a, 32b) für die Mittel zur elektromechanischen Betätigung umzuwandeln, und mindestens einen Führungseingang (41 a, 41 b, 42a, 42b) der Einheit zur Kontrolle der Leistung (8a, 8b), und andererseits mindestens eine Führungseinheit (9) der Einheit zur Kontrolle der Leistung (8a, 8b), die verschieden und getrennt von dieser Letzteren ist, und umfassend mindestens einen Steuerungseingang (91 a, 91 b) und mindestens einen Steuerungsausgang (41 a, 41 b, 42a, 42b), der ausgelegt ist, um mit dem Führungseingang der mindestens einen Einheit zur Kontrolle der Leistung (8a, 8b) verbunden zu sein, wobei die Führungseinheit (9) zwischen den mindestens zwei Gondeln (1 a, 1 b) geteilt ist und mindestens einen Dateneingang (91 a, 91 b) von einem Flugzeugcomputer (2a, 2b) umfasst, gewöhnlich als FADEC oder EEC bezeichnet.

2. Flugzeug nach Anspruch 1, **dadurch gekennzeichnet, dass** die Führungseinheit (9) auch mindestens einen Steuerungsausgang von mindestens einem Verriegelungsmittel (71 a, 71 b) des Systems zur Schubumkehr umfasst.

3. Flugzeug nach einem der Ansprüche 1 oder 2, **dadurch gekennzeichnet, dass** die Einheit zur Kontrolle der Leistung (8a, 8b) mindestens einen Dissipationswiderstand (10a, 10b) umfasst, vorzugsweise an der Außenseite eines Gehäuses der entsprechenden Einheit zur Kontrolle der Leistung.

4. Flugzeug nach einem der Ansprüche 1 bis 3, **dadurch gekennzeichnet, dass** die Einheit zur Kontrolle der Leistung (8a, 8b) mindestens einen Trapez-Führungswechselrichter umfasst.

5. Flugzeug nach einem der Ansprüche 1 bis 4, **dadurch gekennzeichnet, dass** die Einheit zur Kontrolle der Leistung (8a, 8b) einen Gleichrichter von Wechselstrom zu Gleichstrom umfasst.

6. Flugzeug nach einem der Ansprüche 1 bis 5, **dadurch gekennzeichnet, dass** die Einheit zur Kontrolle der Leistung (8a, 8b) einen Bremskreislauf mit einem integrierten Schalter umfasst.

7. Flugzeug nach einem der Ansprüche 1 bis 6, **dadurch gekennzeichnet, dass** die Einheit zur Kontrolle der Leistung (8a, 8b) mindestens einen Eingang (51 a, 51 b, 52a, 52b, 55a, 55b) von Kontrollinformationsdaten von mindestens z.B. einem Positionssensor und/oder einen Geschwindigkeitssensor und/oder der Bremsung umfasst.

8. Flugzeug nach einem der Ansprüche 1 bis 7, **dadurch gekennzeichnet, dass** die Einheit zur Kontrolle der Leistung (8a, 8b) mindestens eine Vorrichtung zur passiven oder aktiven Glättung zur Abweisung von Oberschwingungsstrom umfasst.

9. Flugzeug nach einem der Ansprüche 1 bis 8, **dadurch gekennzeichnet, dass** es einen Trennschalter (21 a, 21 b) umfasst, der zwischen der Quelle der elektrischen Leistung und der Einheit zur Kontrolle der Leistung angebracht ist.

10. Flugzeug nach einem der Ansprüche 1 bis 9, **dadurch gekennzeichnet, dass** die Einheit zur Kontrolle der Leistung (8a, 8b) mindestens einen Dateneingang aus einem Flugzeugcomputer (2a, 2b) umfasst, gewöhnlich als FADEC oder EEC bezeichnet.

11. Flugzeug nach einem der Ansprüche 1 bis 10, **dadurch gekennzeichnet, dass** die Einheit zur Kontrolle der Leistung (8a, 8b) in einem als kalt bezeichneten Bereich der Gondel angeordnet ist.

12. Flugzeug nach einem der Ansprüche 1 bis 11, **dadurch gekennzeichnet, dass** die Führungseinheit (9) mit Niederspannung (90) versorgt wird.

13. Flugzeug nach einem der Ansprüche 1 bis 12, **dadurch gekennzeichnet, dass** die Einheit zur Kontrolle der Leistung (8a, 8b) und/oder die Antriebseinheit (9) mindestens einen Datenausgang in Richtung eines Flugzeugcomputers umfasst, gewöhnlich als FADEC oder EEC bezeichnet.

14. Flugzeug nach einem der Ansprüche 1 bis 13, **dadurch gekennzeichnet, dass** die Führungseinheit (9) mindestens einen Dateneingang von mindestens einem Sensor vom Typ Positions- oder Zustandssensor umfasst.

## Claims

1. An aircraft comprising at least two turbojet engines (3a, 3b) each housed in a nacelle (1a, 1b), each nacelle (1a, 1b) of the turbojet engine (3a, 3b) comprising a front section of air inlet, a middle section intended to surround a fan of the turbojet engine and a rear section provided with at least one thrust reverser system comprising, on the one hand, diverting means of at least a portion of an air flow of the turbojet engine, and on the other, at least one movable cowl (4a, 5b, 5a, 5b) capable of alternately switching, under the action of at least one electromechanical actuating means (6a, 6b, 7a, 7b), from a closing position, wherein it ensures the aerodynamic continuity of the nacelle and wherein the diverting means are inactive, to an opening position wherein it opens a passage in the nacelle and wherein the diverting means are active, the aircraft comprising
on the one hand, at least one power controlling unit (8a, 8b) equiping each nacelle, the at least one power controlling unit being capable of transforming a high-voltage power supply (20a, 20b) into at least a power supply (31 a, 31 b, 32a, 32b) intended for the electromechanical actuating means, and at least one drive input (41 a, 41 b, 42a, 42b) of said power controlling unit (8a, 8b), and on the other, at least one drive unit (9) of the power controlling unit (8a, 8b), distinct and separate from the latter, and comprising at least one control input (91 a, 91 b) and at least one drive output (41 a, 41 b, 42a, 42b) intended to be connected to the drive input of the at least one power controlling unit (8a, 8b), the drive unit (9) being shared between at least two nacelles (1 a, 1 b) and comprising at least one data input (91 a, 91 b) coming from an airplane calculator (2a, 2b), commonly called FADEC or EEC.

2. The aircraft according to claim 1, **characterized in that** the drive unit (9) also comprises at least one control output of at least one locking means (71 a, 71 b) of the thrust reverser system.

3. The aircraft according to any one of claims 1 or 2, **characterized in that** the power controlling unit (8a, 8b) comprises at least one dissipation resistor (10a, 10b), preferably external to a housing of the corresponding power controlling unit.

4. The aircraft according to any one of claims 1 to 3, **characterized in that** the power controlling unit (8a, 8b) comprises at least one trapezoidal drive inverter.

5. The aircraft according to any one of claims 1 to 4 **characterized in that** the power controlling unit (8a, 8b) comprises a rectifier from alternating current to direct current.

6. The aircraft according to any one of claims 1 to 5, **characterized in that** the power controlling unit (8a, 8b) comprises a braking circuit including an integrated switch.

7. The aircraft according to any one of claims 1 to 6, **characterized in that** the power controlling unit (8a, 8b) comprises at least one input (51 a, 51 b, 52a, 52b, 55a, 55b) of a controlling information data coming from at least one position sensor and/or a speed sensor and/or a braking sensor, for example.

8. The aircraft according to any one of claims 1 to 7, **characterized in that** the power controlling unit (8a, 8b) comprises at least one active or passive smoothing device of harmonic current rejection.

9. The aircraft according to any one of claims 1 to 8, **characterized in that** it comprises a circuit breaker (21 a, 21 b) disposed between the electric power source and the power controlling unit.

10. The aircraft according to any one of claims 1 to 9, **characterized in that** the power controlling unit (8a, 8b) comprises at least one data input coming from an airplane calculator (2a, 2b), commonly called FADEC or EEC.

11. The aircraft according to any one of claims 1 to 10, **characterized in that** the power controlling unit (8a, 8b) is disposed in an area, called cold area, of the nacelle.

12. The aircraft according to any one of claims 1 to 11, **characterized in that** the drive unit (9) is powered by low voltage (90).

13. The aircraft according to any one of claims 1 to 12, **characterized in that** the power controlling unit (8a, 8b) and/or the drive unit (9) comprises at least one data output in the direction of an airplane calculator, commonly called FADEC or EEC.

14. The aircraft according to any one of claims 1 to 13, **characterized in that** the drive unit (9) comprises at least one data input coming from at least one sensor, of the position or condition sensor type.
